# EUROPEAN PATENT SPECIFICATION

(11) **EP 2 003 913 B1**
(45) Date of publication and mention of the grant of the patent: **23.05.2012**
(21) Application number: 07710889.2
(22) Date of filing: 09.02.2007
(51) Int. Cl.: H04W 24/04, H04W 88/14

(54) **A CALL RECOVERY METHOD DURING THE NETWORK FAILURE AND THE SYSTEM THEREOF**
ANRUFWIEDERHERSTELLUNGSVERFAHREN WÄHREND EINES NETZAUSFALLS UND ZUGEHÖRIGES SYSTEM
PROCÉDÉ DE RÉCUPÉRATION D'APPEL PENDANT UNE DÉFAILLANCE DE RÉSEAU ET SYSTÈME ASSOCIÉ

(30) Priority: 31.03.2006 CN 200610067004
(43) Date of publication of application: 17.12.2008
(73) Proprietor: Huawei Technologies Co., Ltd., Longgang District, Shenzhen Guangdong 518129 (CN)
(72) Inventor: FANG, Jun, Guandong 518129 (CN); YE, Sihai, Guandong 518129 (CN); DING, Yan, Guandong 518129 (CN)
(74) Representative: Thun, Clemens
(86) International application number: PCT/CN2007/000460
(87) International publication number: WO 2007/112644

(56) References cited:
- WO-A-00/69184
- CN-A- 1 266 340
- CN-A- 1 585 558
- CN-A- 1 819 699
- US-A1- 2005 192 005
- US-A1- 2006 052 101
- US-B1- 6 408 182
- US-B1- 6 408 182
- "DIGITAL CELLULAR TELECOMMUNICATIONS SYSTEM (PHASE 2+) (GSM); UNIVERSAL MOBILE TELECOMMUNICATIONS SYSTEM (UMTS): TECHNICAL REPORTON PRE-PAGING (3G TR 23.908 VERSION 3.0.0 RELEASE 1999)" ETSI TR 123 908 V3.0.0, XX, XX, 1 January 2000 (2000-01-01), pages 1-18, XP002150277
- CHAN S-CH ET AL: "FAULT TOLERANCE OF PCS MOBILITY DATABASES" PROCEEDINGS OF THE INTERNATIONAL CONFERENCE ON COMPUTERCOMMUNICATIONS AND NETWORKS, XX, XX, 22 September 1997 (1997-09-22), pages 542-547, XP002061518

## Description

This application claims a priority to the Chinese Patent Application No. 200610067004.7, filed with the Chinese Patent Office on March 31, 2006 and entitled "Method and System for Recovering Calls in the Case of Network Failure" .

### FIELD OF THE INVENTION

The present invention relates to the field of communication technologies, and in particular, to a method and a system for recovering calls in the case of network failure.

### BACKGROUND

In a traditional Global System for Mobile communication (GSM) or Universal Mobile Telecommunications System (UMTS), a Radio Network Controller (RNC) or a Base Station Controller (BSC) can be connected to only one Mobile Switching Center (MSC). With the development of the softswitch architecture, high-capacity networks are more and more popularized in a wireless communication system, and security is a more and more important concern of the operators. Every equipment supplier has to consider how to avoid massive service interruption in the case of single-point failure.

The Iu-Flex/A-Flex technology is put forward at the 3GPP R5 stage. In the Iu-Flex/A-Flex networking technology, an RNC or a BSC can be connected with multiple MSCs concurrently, thus making up a resource pool. Such a technology avoids massive service interruption in the case that a single MSC fails, and accomplishes load balance and resource sharing between MSCs in a resource pool.

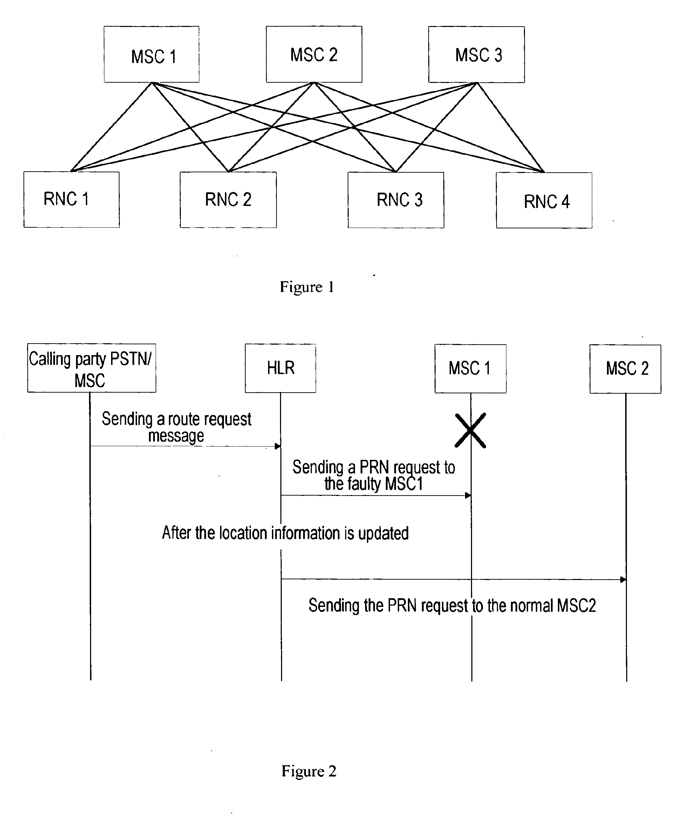

Figure 1 shows the Iu-Flex networking architecture in the prior art. As shown in Figure 1, in an Iu-Flex network, four RNCs are connected with three MSCs. When one MSC fails, the calls need to be transferred to other normal MSC. Figure 2 shows the terminated call process after a MSC fails in an Iu-Flex network in the prior art, including: The calling party sends a route requesting message to the Home Location Register (HLR); if the location information stored in the HLR is MSC1 but MSC1 fails at the moment and the HLR still sends an Provide Roaming Number (PRN) request to the faulty MSC1, the call will fail.

In the prior art, however, the call cannot succeed unless the user updates the location by means of, for example, getting re-registered at another MSC such as MSC2. Location update comes in two types: mobile originated update and periodical update. Mobile origination update is a type of location update initiated by the user, for example, when the user sends a location update request after moving from one cell to another or performing a mobile origination service such as making a call or sending a short message. Periodical update is a type of location update originated by the user automatically at a preset time interval. In the prior art, when an MSC fails, the maximum duration of an unsuccessful attempt of making a call to a user is equal to the interval of periodical location update. The call to the user can succeed only if: the user performs mobile origination update or periodical location update, the location information in the HLR is updated, and the HLR sends a PRN request to the normal MSC2.

The foregoing solution reveals that, when an MSC fails and the called party of the MSC does not update the location, the user will be unable to receive a call during the interval of location update.
WO 00/69184 A discloses a method for error handling in radiocommunication systems employing pre-paging. In particular is disclosed that the HLR will request the roaming number from the VLR by sending a PRN(message 3); and is disclosed that the VMSC/VLR 30 will pre-page the terminal 5 to ensure the availability of the subscriber within its service area(message 4), only after successfully pre-paging the subscriber does the VMSC/VLR 30 provide a roaming number that is forwarded to the GMSC 10 via the HLR 20. WO 00/69184 A fails to disclose how to complete the subsequent call quickly;
US-B 1-6408182 discloses a method for redundant mobile switching center architecture for a radio telecommunications network. In particular is disclosed that a backup MSC is serving the mobile station when the original MSC is inoperational, but US-B1-6408182 fails to disclose how to complete the subsequent call quickly.
CHAN S-CH ET AL: "FAULT TOLERANCE OF PCS MOBILITY DATABASES" PROCEEDINGS OF THE INTERNATIONAL CONFERENCE ON COMPUTERCOMMUNICATIONS AND NET NETWORKS ,XX, XX, 22 September 1997 discloses a method for the basic call termination procedure. In particular, it is disclosed that the HLR sends a MAP_PROVIDE_ROAMING_NUMBER message to the VLR to obtain MSRN, the VLR creates the MSRN by using the MSC number stored in the VLR record of the MS, A SS7 ISUP IAM message is directed from the gateway MSC to the target MSC to set up the voice trunk. It fails to disclose how to complete the subsequent call quickly.
"DIGITAL CELLULAR TELECOMMUNICATIONS SYSTEM (PHASE 2+)(GSM); UNIVERSAL MOBILE TELECOMMUNICATIONS SYSTEM (UMTS): TECHNICAL REPORTON PRE-PAGING (3G TR 23.908 VERSION 3.0.0 RELEASE 1999)" ETSI TR 123 908 V3.0.0, XX, XX, 1 January 2000 discloses the application of Pre-paging, basic pre-paging, pre-page negotiation; but it fails to disclose how to complete the subsequent call quickly.
US 2006/052101 A1 disclose a method for assigning a mobile subscriber roaming number, in particular, it discloses that the mobile subscriber roaming number comprises a Visitor Location Register module number, and said Visitor Location Register module number is utilized to directly determine the correspondence relationship between said assigned mobile subscriber roaming number and the Visitor Location Register module in said Visitor Location Register that manages said mobile subscriber roaming number. But it fails to disclose how to complete the subsequent call quickly.

### SUMMARY

The technical solution provided in an embodiment of the present invention is to provide a method and a system for recovering calls in the case of network failure, with a view to solve the problem in the prior art, that is, the called party is unable to receive a call when the MSC fails and the called party of the faulty MSC does not update location at the moment.

In order to solve the foregoing technical problem, an embodiment of the present invention provides a method for recovering calls in the case of network failure, including:
sending a Provide Roaming Number, PRN, request to a Mobile Switching Center, MSC, working normally through a standby route after the called party MSC fails;
obtaining, by the MSC working normally, the information about the location area of the called party;
performing pre-paging according to the location of the called party;
updating the user data after a pre-paging response is received from the called party; and
returning a roaming number through a route connected with the MSC working normally, and completing the subsequent call;
wherein the standby routes directed to multiple other MSCs are configured while an active route directed to the called party MSC is configured.

Further, a system for recovering calls in the case of network failure provided in an embodiment of the present invention includes:
a transferring unit, adapted to send a Provide Roaming Number, PRN, request to a Mobile Switching Center, MSC, working normally through a standby route; and
the MSC, connected with the transferring unit and adapted to obtain the information about the location area of the called party according to the PRN request, perform pre-paging in the user location area, and return a roaming number through the route to complete the subsequent call.

In the method and system provided in an embodiment of the present invention, after a network fails, the mobile termination service of the user corresponding to the faulty MSC is transferred to the normal MSC, and is hence free from impact of the faulty MSC. This solves the problem in the prior art, that is, it takes even hours for the user to recover the mobile termination service after the MSC fails.

### BRIEF DESCRIPTION OF THE DRAWINGS

Figure 1 shows the structure of an Iu-Flex network in the prior art.

Figure 2 shows the mobile termination process after an MSC fails in an Iu-Flex network in the prior art.

Figure 3 is a flowchart of a call method in the case of network failure according to an embodiment of the present invention.

Figure 4 is a detailed flowchart of a call method in the case of network failure illustrated in Figure 3.

Figure 5 shows the structure of a call system in the case of network failure according to an embodiment of the present invention.

Figure 6a is a flowchart of backing up user data according to an embodiment of the present invention.

Figure 6b is a flowchart of obtaining user data according to an embodiment of the present invention.

Figure 7 shows the structure of a call system in the case of network failure according to another embodiment of the present invention.

Figure 8 is a flowchart of a call method in the case of network failure according to another embodiment of the present invention.

Figure 9 is a detailed flowchart of a call method in the case of network failure illustrated in Figure 8.

### DETAILED DESCRIPTION

The present invention is hereinafter described in detail with reference to embodiments and accompanying drawings.

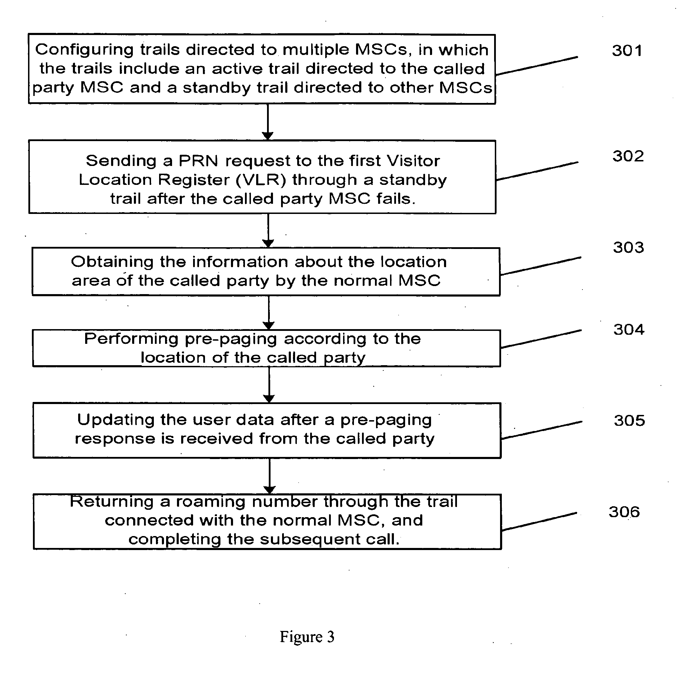

Figure 3 is a flowchart of a call method in the case of network failure in an embodiment of the present invention. The method includes the steps as described hereinafter.
Step 301: configuring routes directed to multiple MSCs, in which the routes include an active route directed to the MSC of the called party and a standby route directed to other MSCs;
Step 302: sending a PRN request to a normal MSC through a standby route after the called party MSC fails;
Step 303: obtaining, by the normal MSC, the information about the location of the called party;
Step 304: performing pre-paging according to the location of the called party;
Step 305: updating the user data after a pre-paging response is received from the called party;
Step 306: returning a roaming number through the route connected with the normal MSC, and completing the subsequent call.

Through the technical solution to call recovery in the case of Iu-Flex or A-Flex network faults under the present invention, the HLR can find a normal MSC immediately when an MSC fails in the network and the user in the faulty MSC does not update the location in a long time segment, and the normal MSC performs paging to the called party of the faulty MSC through the normal MSC to implement the call termination process of the user, thus solving the problem that the user is possibly unable to receive calls in a long time segment after an MSC fails.

In the embodiment of the present invention, the Iu-Flex network is used for the exemplary purpose. In the practical application, the A-Flex network is also applicable to the present invention. In the A-Flex networking mode, the structure is similar to the Iu-Flex network except that the RNC is replaced with the BSC.

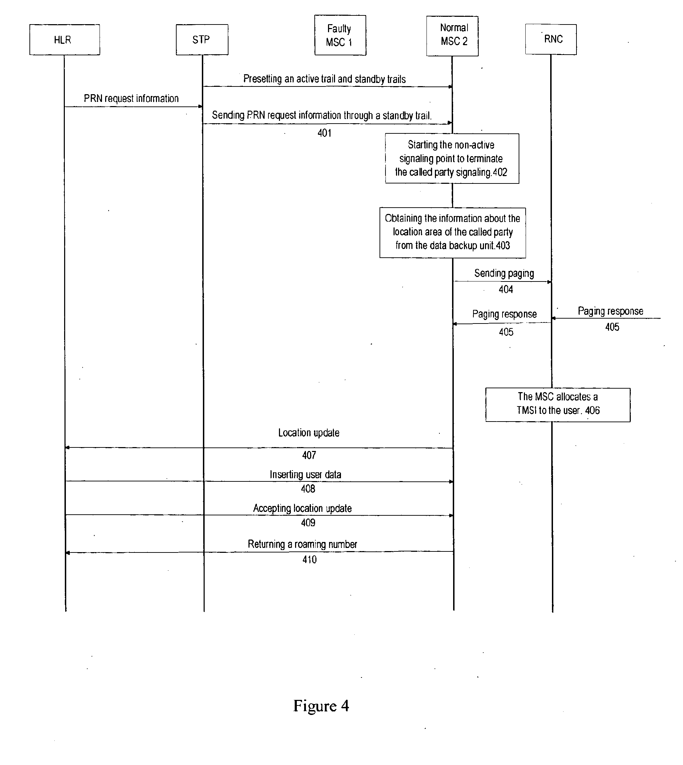

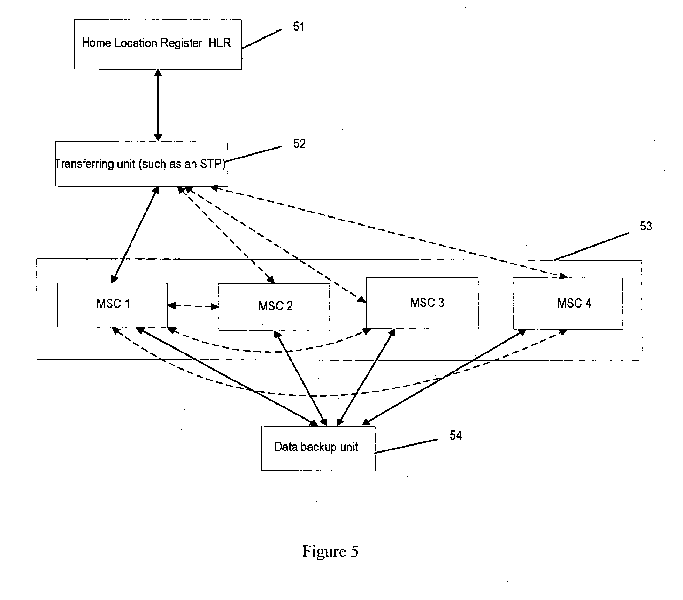

Figure 4 is a detailed flowchart of a call method in the case of network failure illustrated in Figure 3. As shown in Figure 4, in step 401, the Signaling Transfer Point (STP) has configured the routes directed to all MSCs (such as MSC1, MSC2, MSC3, and MSC4 in Figure 5). Namely, if the route directed to the MSC of the called party is active, the routes directed to other MSCs are standby. In this embodiment, the calling party originates a call to the user attatched to MSC1, so the route from the STP to MSC1 is used as an active route, and the routes from the STP to MSC2, MSC3 and MSC4 (the routes directed to MSC3 and MSC4 are not shown in figure, hereinafter the same) are standby routes.

As described above, when MSC1, MSC2, MSC3 and MSC4 work normally and the calling party makes a call to the user in the MSC1, the communication route "HLR-STP1-MSC1" is preferentially selected for transmitting data, and the routes "HLR-STP-MSC2", "HLR-STP-MSC3" and "HLR-STP-MSC4" serve as standby routes. When the MSC1 works normally, the foregoing standby routes are disabled. To make the description clearer, the standby route from STP to MSC2 is discussed below as an example.

As shown in Figure 4, after the calling party originates a call to the called party corresponding to MSC1, a PRN request is sent from the HLR to the STP. After receiving the RPN request, the STP analyzes the PRN request, puts the Destination Signaling Point (DSP) information into the PRN request, and analyzes the DSP information to determine which MSC serves as a DSP. When MSC1 fails and becomes inaccessible, the active route from the STP to MSC1 is unavailable. Before this, the STP has configured standby routes directed to other MSCs such as MSC2. Therefore, the STP can send the PRN request to other normal MSCs such as MSC2 through the standby route (step 401).

In Step 402, when MSC2 receives the PRN request transferred by the STP, MSC2 analyzes the DSP information in the PRN message. After analysis, MSC2 determines that the DSP of the PRN request is not the normal MSC2, so MSC2 is enabled as a non-active Signaling Point (SP). In the embodiments of the present invention, the multi-SP technology is applied. Namely, when an MSC is normal and works as a called DSP, the SP works as an active SP; when another MSC fails and requires this MSC to work in place of the faulty MSC, the normal MSC works as a non-active SP.

In this case, the MSC2 contains no data of the corresponding called party. Therefore, the MSC2 needs to obtain the information about the location area of the called party. In Step 403, MSC2 can search and read the location area of the called party in the VLR data backup unit. Preferably, the method for obtaining the information about the location area of the called party may be: The VLR data backup unit sends the stored information, which is stored in the VLR data backup unit and is about the location area of the users in the MSC2 at a preset time interval.

After obtaining the information about the location area of the called party, MSC2 starts pre-paging in the corresponding location area to obtain the user data. Specifically, in Step 404, the MSC2 sends a paging message in the location area first, and then waits for the paging response from the called client. Meanwhile, according to the protocol, the Radio Network Controller (RNC) stores the corresponding relationship between the normal MSC and the user number, for example, the corresponding relationship between the CN-ID and the IMSI. In Step 405, after the called party in the location area receives a call from the MSC2, the called party sends a paging response to the RNC; after receiving the user paging response transferred by the RNC, the normal MSC2 allocates a Temporary Mobile Subscriber Identifier (TMSI) to the user in step 406, so that the called party can log in to the mobile communication network through the TMSI. After the TMSI is allocated, in Step 407, the MSC2 returns a location update message to the HLR. After receiving the location update message, the HLR inserts user data into the normal MSC2 in Step 408, and updates the relevant MSC number in the HLR. In Step 409, the HLR returns information which indicates that the location update can be accepted to the MSC2, thus completing the location update process. Afterward, in step 410, the normal MSC returns a roaming number to the HLR, so that the subsequent call to the called party can be completed according to the roaming number and the call to the user in a faulty MSC1 is implemented successfully.

After obtaining the roaming number of the called party, the HLR notifies the roaming number to the calling party, so as to complete the subsequent call process. The subsequent call process is the same as the standard paging process provided by the communication systems such as WCDMA, CDMA, TD-CDMA, and GSM in the prior art, which is well known to the technicians in this field and not described here any further.

Figure 5 shows the structure of a call recovery system in the case of network failure in an embodiment of the present invention. As shown in Figure 5, the call recovery system includes: a HLR 51, a transferring unit 52, more than one MSC 53, and a data backup unit 54.

The transferring unit 52 is intended to: configure the routes (including the active route directed to the called party MSC and the standby routes directed to other MSCs) from the HLR 51 to more than one MSC 53; after detecting a fault of the called party MSC, send the PRN request received from the HLR to the normal MSC through a standby route. In this embodiment, the transferring unit 52 is implemented through the STP; in the practical application, it can be implemented also through a software module or a hardware control logic entity, which are well known to those skilled in the art and not described here any further. The STP provides the signaling transfer function, and can transfer a signaling message from one signaling point to another.

As shown in Figure 5, STP52 receives the signaling such as a PRN request from HLR51. Each mobile subscriber must be registered on the HLR. The PRN request is generated when the calling party originates a call to the called party. The calling party sends the PRN request to the HLR, so the HLR needs to send the request to the corresponding MSC. In this way, the MSC can obtain the roaming number of the called party after initiating paging, and can complete the call. In this embodiment, the PRN request needs to be sent to the STP52 located between the HLR and more than one MSC first, and the STP52 will implement message transferring. The STP has set the routes directed to multiple MSCs.

The MSC53 (represented by MSC1, MSC2, MSC3, and MSC4 in the figure) is connected with the STP52, and is adapted to obtain the information about the location area of the called party through communication with the data backup unit, and obtain the information about the location of the user through paging in the location area of the user. As shown in the figure, there are four MSCs: MSC1, MSC2. MSC3 and MSC4 in this embodiment. Routes are set up from the four MSCs to the STP. When the calling party makes a call to the user in the MSC1, the route from the STP to MSC1 is an active route, and the routes from the STP to MSC2, MSC3 and MSC4 are standby routes.

When all MSCs are normal and the calling party makes a call to a user in the MSC1, a communication route is set up from the STP to MSC1, MSC2, MSC3 and MSC4, as shown in the figure. The HLR-STP-MSC1 route (namely, the route indicated by solid lines in the figure) is preferentially selected for transmitting data, and the HLR-STP-MSC2 route, the HLR-STP-MSC3 route and the HLR-STP-MSC4 route serve as standby routes (indicated by dotted lines in the figure). When the MSC1 works normally, the foregoing standby routes are disabled. All the above four MSCs are connected with the data backup unit 54, so as to read the information about the location area of the user from the data backup unit through a predetermined communication protocol, and back up the user location information about the users attached to each MSC to the data backup unit 54 in real time.

The data backup unit 54 is connected with the MSC 53 and adapted to store the user data of multiple MSCs. In an embodiment of the present invention, the data backup unit 54 can be realized through a VLR. The VLR is a database connected to one or more MSCs. A VLR stores the backup of the information about all mobile subscribers in the HLR in each cell covered by the MSCs, and dynamically stores the information (for example, location area information) about the visitor users in the area covered by the VLR. The data backup unit 54 is a database that stores the location information and the management information of the users who roam in the relevant MSC areas, and is connected with more than one MSC in the network.

The data backup unit may also be a VLR data backup unit. A VLR data backup unit may be in any of these forms: a stand-alone physical entity, an entity distributed in the MSC, or a logic entity which is concurrently acted by a VLR in the MSC. Namely, a VLR data backup unit may be a register unit that exists independently in a network, for example, a stand-alone database server in a network. Alternatively, a VLR data backup unit may be a register unit located in one or more MSCs, or a VLR in the MSC. For example, a portion of the resources in a VLR can be used as a data backup unit.

The VLR data backup unit may communicate with the MSC in any applicable mode such as Signaling System No. 7 (SS7) and IP communication. Moreover, the backup objects of the VLR data backup unit include user data of one or more MSCs in a network.

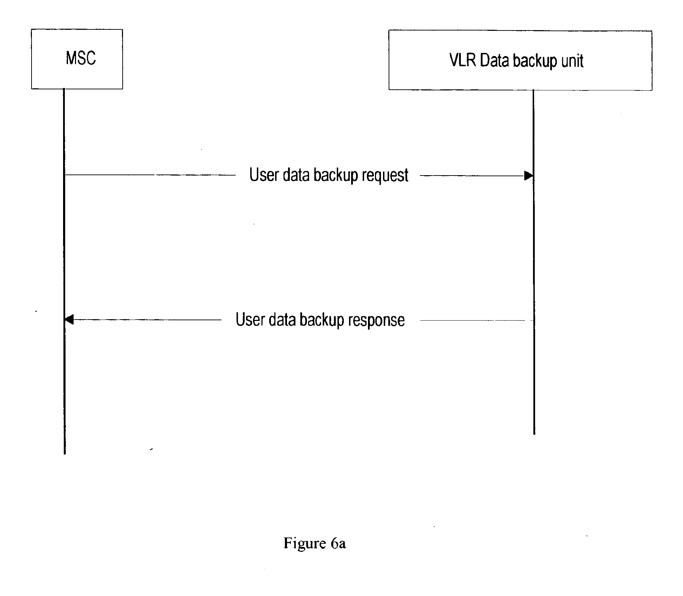

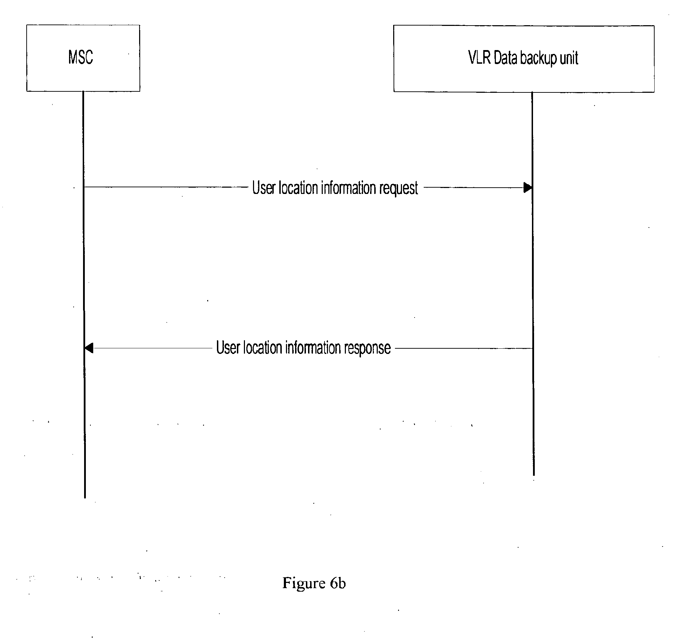

Referring to both Figure 6a and Figure 6b, Figure 6a is a flowchart of backing up user data in an embodiment of the present invention, and Figure 6b is a flowchart of obtaining user data in an embodiment of the present invention. In this embodiment, a VLR data backup unit is used to store the user data of all MSCs in the resource pool. The user data includes but is not limited to: user identifiers, location information, and user state, and even all kinds of information related to the called party.

If no similar data backup unit exists in the network, the MSC must obtain user data through paging the entire-network in order to obtain user information. The paging scope may be a whole city or a wider area, which increases the load of the network immensely. However, if a VLR data backup unit exists in the network, the MSC will be able to obtain the information about the location area of the user from the VLR data backup unit, and initiate paging to the called party in a specified area in order to obtain update of the user data, thus avoiding the paging to the called party throughout the network.

In the network operation process, the data obtained by each MSC can be backed up into the VLR data backup unit in real time. Alternatively, the data obtained by an MSC can be backed up into the VLR data backup unit at a preset interval (such as every five minutes).

As shown in Figure 6a, first, the MSC sends a user data backup request to the VLR data backup unit; and alternatively, the VLR data backup unit sends a user data backup request response to the MSC after receiving a user data backup request, and backs up, after the MSC receives the user data backup request response, the user data carried in the request response into the VLR data backup unit through a predetermined communication mode, such as SS7 signaling, between the MSC and the VLR data backup unit. User data can be backed up in real time or a preset interval. Real-time backup stores the backup of the user data in the MSC in real time. In order to relief the system load, the user data can be backed up at an interval. The interval can be selected according to the network system state.

When an MSC needs to obtain the user data in a VLR data backup unit, the system starts the process of obtaining user data. As shown in Figure 6b, first, the MSC sends a user location information request to the VLR data backup unit. After receiving the user location information request, the VLR data backup unit returns a user location information response to the MSC. After receiving the user location information response, the MSC reads the user data stored in the VLR data backup unit through a predetermined communication mode such as SS7 between the MSC and the VLR data backup unit.

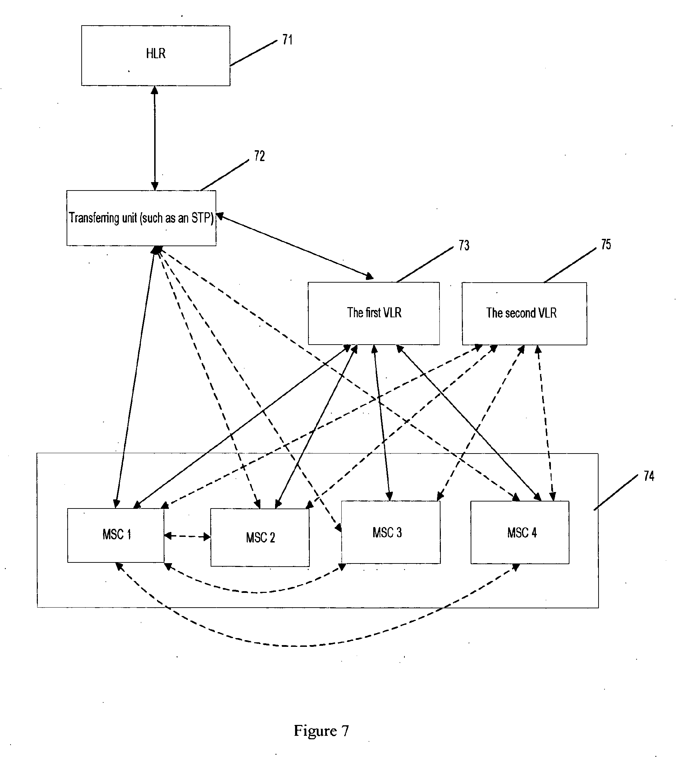

Figure 7 shows the structure of a call system in the case of network failure in another embodiment of the present invention. Traditionally, the MSC and the VLR are set in the same device, one MSC corresponds to one VLR, and the MSC communicates with the VLR through an internal interface. In this embodiment, however, the VLRs in the resource pool are set altogether. Multiple MSCs share one VLR, and the VLR backs up user data. When an MSC fails, if the user of the faulty MSC serves as a called party, the VLR can select a normal MSC and allocate a roaming number to it to complete the call termination service. See the networking diagram in Figure 7.

The call system in this embodiment includes: a HLR 71, a transferring unit 72, a first VLR 73, an MSC 74, and a second VLR 75.

The transferring unit 72 is adapted to configure the routes directed to multiple MSCs, and send the PRN request to the first VLR. The transferring unit is realized through an STP in this embodiment. Alternatively, it may be realized through a software module, or a hardware control logic entity. The STP provides the signaling transfer function, and can transfer a signaling message from one signaling point to another.

As shown in Figure 7, the transferring unit 72 (taking STP as an example) receives the signaling such as a PRN request from the HLR 71. Each mobile subscriber must be registered on the HLR. The PRN request is generated when the calling party originates a call to the called party. The calling party sends the PRN request to the HLR, so the HLR needs to send the request to the VLR, and the VLR selects an MSC (such as MSC2 in the figure) to complete the subsequent call. An STP is adapted to transfer messages. The STP has set the routes directed to multiple MSCs.

The first VLR 73 is connected with the transferring unit 72 (taking STP as an example) and adapted to select the normal MSC and allocate a roaming number to the normal MSC. The first VLR is realized through centralized setting of all VLRs in the resource pool. Traditionally, one VLR corresponds to one MSC, and each VLR backs up the user data in the corresponding MSC. In this embodiment, however, the VLRs which are set altogether can record the user data in all MSCs of the resource pool in order to complete the paging.

Further, this embodiment includes a second VLR 75. The second VLR 75 is set as a standby device of the first VLR. When the first VLR (namely, the active VLR) fails, the second VLR (namely, the standby VLR) takes the place of the first VLR. The connection relationship of the second VLR is the same as that of the first VLR.

The MSC 74 is connected with the STP 72, the first VLR 73 and the second VLR 75, and adapted to obtain the information about the location area of the called party through communication with the data backup unit, and obtain the information about the location of the user through paging in the location area of the user. In this embodiment, there are four MSCs: MSC1, MSC2, MSC3 and MSC4. Routes are set up from the four MSCs to the STP, the first VLR and the second VLR.

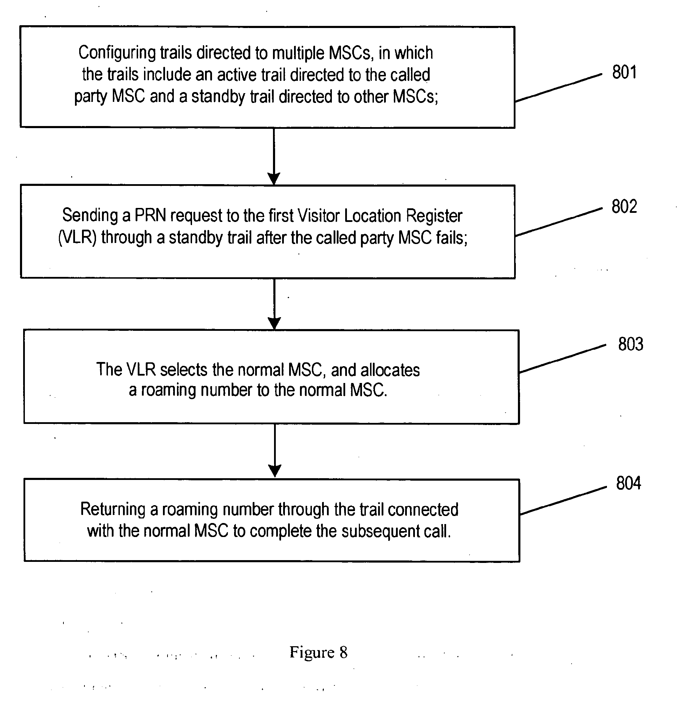

Figure 8 is a flowchart of a call method in the case of network failure in an embodiment of the present invention. The method includes the steps as described hereinafter.
Step 801: configuring routes directed to multiple MSCs, in which the routes include an active route directed to the called party MSC and a standby route directed to other MSCs.
Step 802: sending a PRN request to the first Visitor Location Register (VLR) through a standby route after the called party MSC fails.
Step 803: The VLR selects the normal MSC, and allocates a roaming number to the normal MSC.
Step 804: returning a roaming number through the route connected with the normal MSC, and completing the subsequent call.

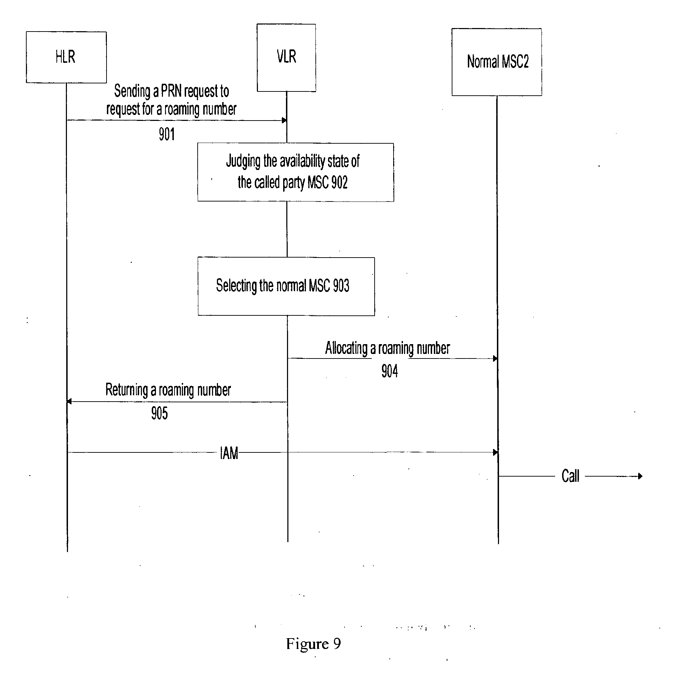

As shown in Figure 9, the detailed implementation process of the method is detailed below.

As shown in the figure, in Step 901 in this embodiment, since a calling party originates a call to a user inside the network, the HLR sends a PRN request to the VLR. The VLR needs to know whether the called party MSC fails. Therefore, in step 902, the VLR judges the availability state of the called party MSC, namely, judges whether the MSC fails through active detection and retrieval of relevant information.

The VLR may actively judge whether the MSC is available, for example, judge the MSC state through a handshake mechanism. A handshake mechanism is set up between the VLR and the MSC. If the handshake operation fails, it indicates that the MSC is faulty. Moreover, the link state may be used as a basis for judging whether the MSC is faulty. For example, when the link state information indicates an unreachable MSC signaling point, the VLR knows that the MSC is faulty.

The VLR can also judge whether the MSC is faulty by other means, for example, the Network Management System (NMS) automatically or manually notifies the VLR that an MSC fails; or another Network Element (NE) such as a normal MSC in the resource pool notifies the VLR that an MSC fails.

After the VLR knows that MSC1 fails, if the user of the faulty MSC1 is called, the HLR will send a PRN request to the VLR. In Step 904, the VLR allocates a roaming number to a normal MSC such as MSC2. In Step 905, the VLR returns a roaming number that carries MSC2 identifier information to the HLR, and the HLR returns a route request message to the Gateway MSC (GMSC). Therefore, the GMSC sets up a subsequent process of routing to the MSC2, thus completing the terminated call process of the user. The subsequent call process is the same as the standard paging process available from the communication systems such as WCDMA, CDMA, TD-CDMA and GSM in the prior art, which is well known to the technicians in this field and not described here any further.

According to the foregoing process, the HLR sends a PRN request to the VLR; in step 903, the VLR needs to select an MSC among all normal MSCs, so as to allocate the roaming number and complete a user call. The method for a VLR to select a normal MSC in the resource pool may be any applicable algorithm, for example, select an MSC among all normal MSCs in the resource pool randomly; or alternate one MSC with another among all the MSCs. Taking the alternate mode as an example, if MSC2 works as a standby MSC in the case of the previous MSC fault, when an MSC in the network fails on the next occasion, MSC3 will serve as a standby MSC based on the arrangement sequence. In this case, if MSC3 works normally, MSC3 will be used as a standby MSC; if MSC3 is faulty, MSC4 will be used instead, and so on.

The methods for a VLR to select a normal MSC further include: selecting the MSC of the lowest load. By selecting the MSC of the lowest load, the VLR accomplishes better load balance between the MSCs.

The VLR can also select a normal MSC through static configuration. Static configuration means fixed configuration of selecting a specific MSC for working in place of another MSC which fails. Namely, when a specified MSC fails, the VLR selects a predetermined MSC to work in place of the faulty MSC. For example, if MSC3 is configured as a standby MSC of MSC1, when MSC1 is detected as faulty, MSC3 will be used instead to complete the call to the user in MSC 1.

The technical solution disclosed above reveals that, after a network fails, the mobile termination service of the user corresponding to the faulty MSC is transferred to the normal MSC, and is hence free from the impact of the faulty MSC. This solves the problem in the prior art, that is, it takes even hours for the user to recover the mobile termination service after an MSC fails. Moreover, a data backup unit is applied to the call recovery system in an embodiment of the present invention, thus avoiding the trouble of searching for user information throughout the network and improving the network operation efficiency.

The embodiments described above are only better ones of this invention, and they are not used to confine the protection scope of this invention. It is apparent that those skilled in the art can make various modifications and variations to the invention without departing from the spirit and scope of the invention. The invention is intended to cover the modifications and variations provided that they fall in the scope of protection defined by the following claims.

## Claims

1. A method for recovering calls in the case of network failure, the method comprising:
sending a Provide Roaming Number, PRN, request to an Mobile Switching Center, MSC, working normally through a standby route after a called party MSC fails;
obtaining, by the MSC working normally, the information about the location area of the called party;
performing pre-paging according to the location of the called party;
updating the user data after a pre-paging response is received from the called party; and
returning a roaming number through a route connected with the MSC working normally, and completing the subsequent call;
wherein the standby routes directed to multiple other MSCs are configured while an active route directed to the called party MSC is configured.

2. The method for recovering calls in the case of network failure according to claim 1, wherein the MSC working normally obtains the information about the location area of the called party through a data backup unit.

3. The method for recovering calls in the case of network failure according to claim 2, wherein the data backup unit is adapted to store user location area information in multiple MSCs periodically, in real time or in a mode of alternating the periodical mode with the real-time mode.

4. The method for recovering calls in the case of network failure according to claim 1 or claim 2, wherein the process of obtaining the information about the location area of the called party is: the MSC working normally queries the information about the location area of the called party at the data backup unit , or
the data backup unit sends the information about the location area of the called party to the MSC working normally at a preset interval.

5. The method for recovering calls in the case of network failure according to claim 1, wherein the user data comprises: user identifier, location area information, and user state.

6. A system for recovering calls in the case of network failure, the system comprising:
a transferring unit (52), adapted to send a Provide Roaming Number, PRN, request to a Mobile Switching Center, MSC, working normally through a standby route after a called party MSC fails; and
the MSC working normally, connected with the transferring unit and adapted to:
obtain the information about the location area of the called party according to the PRN request,
perform pre-paging in the user location area, update the user data after receiving a pre-paging response,
and return a roaming number through the route to complete the subsequent call.

7. The system for recovering calls in the case of network failure according to claim 6, wherein the system further comprises:
a data backup unit (54), adapted to store the information about the location area of the users attached to at least one MSC.

8. The system for recovering calls in the case of network failure according to claim 7, wherein the data backup unit (54) is located inside one or more MSCs.

9. The system for recovering calls in the case of network failure according to claim 7 or claim 8, wherein the data backup unit (54) is a database server or a Visitor Location Register, VLR.

10. The system for recovering calls in the case of network failure according to claim 6, wherein the transferring unit (52) is an Signaling Transfer Point, STP.

## Patentansprüche

1. Verfahren zum Wiederherstellen von einem Anruf im Fall einer Netzstörung, wobei das Verfahren Folgendes umfasst:
Senden einer Anforderung zum Bereitstellen einer Roaming-Nummer, PRN-Anforderung, an eine Mobilvermittlungsstelle, MSC, die normal arbeitet, durch einen Reserveweg, nachdem eine MSC eines angerufenen Teilnehmers ausgefallen ist;
Erhalten der Informationen über den Aufenthaltsbereich des angerufenen Teilnehmers durch die normal arbeitende MSC;
Ausführen des Vor-Paging in Übereinstimmung mit dem Ort des angerufenen Teilnehmers;
Aktualisieren von Benutzerdaten, nachdem eine Vor-Paging-Antwort von dem angerufenen Teilnehmer empfangen worden ist; und
Zurücksenden einer Roaming-Nummer durch einen Weg, der mit einer normal arbeitenden MSC verbunden ist, und Abschließen des anschließenden Anrufs;
wobei die Reservewege, die auf mehrere andere MSC gerichtet sind, konfiguriert werden, während ein auf die MSC des angerufenen Teilnehmers gerichteter aktiver Weg konfiguriert wird.

2. Verfahren zum Wiederherstellen von einem Anruf in dem Fall einer Netzstörung nach Anspruch 1, wobei die normal arbeitende MSC die Informationen über den Aufenthaltsbereich des angerufenen Teilnehmers durch eine Datensicherungseinheit erhält.

3. Verfahren zum Wiederherstellen von einem Anruf in dem Fall einer Netzstörung nach Anspruch 2, wobei die Datensicherungseinheit ausgelegt ist, die Informationen über den Aufenthaltsbereich des Benutzers periodisch, in Echtzeit oder in einer Betriebsart des Abwechselns der periodischen Betriebsart mit der Echtzeit-Betriebsart in mehreren MSC zu speichern.

4. Verfahren zum Wiederherstellen von einem Anruf in dem Fall einer Netzstörung nach Anspruch 1 oder Anspruch 2, wobei der Prozess des Erhaltens der Informationen über den Aufenthaltsbereich des angerufenen Teilnehmers Folgendes umfasst:
die normal arbeitende MSC fragt die Informationen über den Aufenthaltsbereich des angerufenen Teilnehmers an der Datensicherungseinheit ab oder
die Datensicherungseinheit sendet die Informationen über den Aufenthaltsbereich des angerufenen Teilnehmers in einem vorgegebenen Intervall an die normal arbeitende MSC.

5. Verfahren zum Wiederherstellen von einem Anruf in dem Fall einer Netzstörung nach Anspruch 1, wobei die Benutzerdaten Folgendes umfassen: einen Benutzeridentifizierer, Informationen über den Aufenthaltsbereich und einen Benutzerzustand.

6. System zum Wiederherstellen von einem Anruf in dem Fall einer Netzstörung, **dadurch gekennzeichnet, dass** das System Folgendes umfasst:
eine Übertragungseinheit (52), die ausgelegt ist, eine Anforderung zum Bereitstellen einer Roaming-Nummer, PRN-Anforderung, an eine Mobilvermittlungsstelle, MSC,
die normal arbeitet, durch einen Reserveweg zu senden, nachdem die MSC eines angerufenen Teilnehmers ausgefallen ist; und
die normal arbeitende MSC, die mit der Übertragungseinheit verbunden ist und ausgelegt ist:
die Informationen über den Aufenthaltsbereich des angerufenen Teilnehmers in Übereinstimmung mit der PRN-Anforderung zu erhalten,
das Vor-Paging in dem Aufenthaltsbereich des Benutzers auszuführen und die Benutzerdaten nach dem Empfangen einer Vor-Paging-Antwort zu aktualisieren, und
eine Roaming-Nummer durch den Weg zurückzusenden, um den anschließenden Anruf abzuschließen.

7. System zum Wiederherstellen von einem Anruf in dem Fall einer Netzstörung nach Anspruch 6, wobei das System ferner Folgendes umfasst:
eine Datensicherungseinheit (54), die ausgelegt ist, die Informationen über den Aufenthaltsbereich der Benutzer zu speichern, die mit wenigstens einer MSC verbunden sind.

8. System zum Wiederherstellen von einem Anruf in dem Fall einer Netzstörung nach Anspruch 7, wobei sich die Datensicherungseinheit (54) innerhalb einer oder mehrerer MSC befindet.

9. System zum Wiederherstellen von einem Anruf in dem Fall einer Netzstörung nach Anspruch 7 oder Anspruch 8, wobei die Datensicherungseinheit (54) ein Datenbank-Server oder ein Besucher-Ortsregister, VLR, ist.

10. System zum Wiederherstellen von einem Anruf in dem Fall einer Netzstörung nach Anspruch 6, wobei die Übertragungseinheit (52) ein Signalisierungsübertragungspunkt, STP, ist.

## Revendications

1. Procédé de récupération d'un appel dans le cas d'une défaillance de réseau, le procédé comprenant :
l'envoi d'une requête de Fourniture de Numéro d'Itinérance, PRN, à un Centre de Commutation de Services Mobiles, MSC, fonctionnant normalement par le biais d'une route de secours après la défaillance d'un MSC d'un appelé ;
l'obtention, par le MSC fonctionnant normalement, des informations relatives à l'emplacement de l'appelé ;
l'exécution d'une prérecherche automatique en fonction de l'emplacement de l'appelé ;
l'actualisation de données d'utilisateur après la réception d'une réponse à la prérecherche automatique provenant de l'appelé ; et
le renvoi d'un numéro d'itinérance par le biais d'une route connectée à un MSC fonctionnant normalement, et l'aboutissement de l'appel consécutif ;
dans lequel les routes de secours vers de multiples autres MSC sont configurées pendant qu'une route active vers le MSC de l'appelé est configurée.

2. Procédé de récupération d'un appel dans le cas d'une défaillance de réseau selon la revendication 1, dans lequel le MSC fonctionnant normalement obtient les informations relatives à l'emplacement de l'appelé par le biais d'une unité de sauvegarde de données.

3. Procédé de récupération d'un appel dans le cas d'une défaillance de réseau selon la revendication 2, dans lequel l'unité de sauvegarde de données est adaptée pour mémoriser des informations d'emplacement d'utilisateur dans de multiples MSC périodiquement, en temps réel ou en alternance entre le mode périodique et le mode en temps réel.

4. Procédé de récupération d'un appel dans le cas d'une défaillance de réseau selon la revendication 1 ou la revendication 2, dans lequel le processus d'obtention des informations relatives à l'emplacement de l'appelé est : l'interrogation par le MSC fonctionnant normalement des informations relatives à l'emplacement de l'appelé au niveau de l'unité de sauvegarde de données, ou
l'envoi par l'unité de sauvegarde de données des informations relatives à l'emplacement de l'appelé au MSC fonctionnant normalement à un intervalle préétabli.

5. Procédé de récupération d'un appel dans le cas d'une défaillance de réseau selon la revendication 1, dans lequel les données d'utilisateur comprennent : un identifiant d'utilisateur, des informations d'emplacement, et l'état d'utilisateur.

6. Système de récupération d'un appel dans le cas d'une défaillance de réseau, le système comprenant :
une unité de transfert (52), adaptée pour envoyer une requête de Fourniture de Numéro d'Itinérance, PRN, à un Centre de Commutation de Services Mobiles, MSC,
fonctionnant normalement par le biais d'une route de secours après la défaillance d'un MSC d'un appelé ; et
le MSC fonctionnant normalement, connecté à l'unité de transfert et adapté pour :
obtenir des informations relatives à l'emplacement de l'appelé en fonction de la requête PRN,
exécuter une prérecherche automatique dans la zone de l'emplacement de l'appelé,
actualiser les données d'utilisateur après la réception d'une réponse à la prérecherche automatique,
et renvoyer un numéro d'itinérance par le biais de la route afin de faire aboutir l'appel consécutif.

7. Système de récupération d'un appel dans le cas d'une défaillance de réseau selon la revendication 6, le système comprenant en outre :
une unité de sauvegarde de données (54), adaptée pour mémoriser les informations relatives à l'emplacement des utilisateurs rattachés à au moins un MSC.

8. Système de récupération d'un appel dans le cas d'une défaillance de réseau selon la revendication 7, dans lequel l'unité de sauvegarde de données (54) est située à l'intérieur d'un ou de plusieurs MSC.

9. Système de récupération d'un appel dans le cas d'une défaillance de réseau selon la revendication 7 ou la revendication 8, dans lequel l'unité de sauvegarde de données (54) est un serveur de base de données ou un Enregistreur de Position Visitée, VLR.

10. Système de récupération d'un appel dans le cas d'une défaillance de réseau selon la revendication 6, dans lequel l'unité de transfert (52) est un Point de Transfert de Signalisation, STP.
